# EUROPEAN PATENT SPECIFICATION

(11) **EP 0 620 633 B1**
(45) Date of publication and mention of the grant of the patent: **22.10.1997**
(21) Application number: 94302554.4
(22) Date of filing: 12.04.1994
(51) Int. Cl.: H02K 5/173, F16D 1/06

(54) **Motor with a stepped shaft and a bearing inner race fixed to a knurled portion of the shaft by an adhesive**
Motor mit einer abgestuften Welle und einem inneren Kugellagerring, der auf einem gerändelten Wellenabschnitt mittels Klebstoff befestigt ist
Moteur avec arbre à diamètre échelonné et une partie interne d'un palier fixée au moyen d'un adhésif à une portion moletée de l'arbre

(30) Priority: 13.04.1993 JP 109875/93
(43) Date of publication of application: 19.10.1994
(73) Proprietor: MINEBEA KABUSHIKI-KAISHA, Kitasaku-gun, Nagano-ken (JP)
(72) Inventor: Yoshimura, Noriyuki, c/o Minebea K.K., Kitasaku-gun, Nagano-ken (JP); Daikuhara, Yutaka, c/o Minebea K.K., Kitasaku-gun, Nagano-ken (JP)
(74) Representative: Howden, Christopher Andrew

(56) References cited:
- EP-A- 0 247 301
- EP-A- 0 269 264
- EP-A- 0 287 296
- FR-A- 2 612 268
- US-A- 5 138 209
- PATENT ABSTRACTS OF JAPAN vol. 16, no. 497 (E-1279) 14 October 1992 & JP-A-41 083 241 (ASMO) 30 June 1992
- DATABASE WPI Week 9227, Derwent Publications Ltd., London, GB; AN 92-225178 & SU-A-1 669 049 (UKRE) 7 August 1991

## Description

THE PRESENT INVENTION relates to a machine having a spindle received in a bore of a component thereby fixed to the spindle. The invention is of particular, but not exclusive, utility to the securing of the inner races of rolling element bearings, such as ball or roller bearings, to motor spindles, for example in motors employed in office equipment.

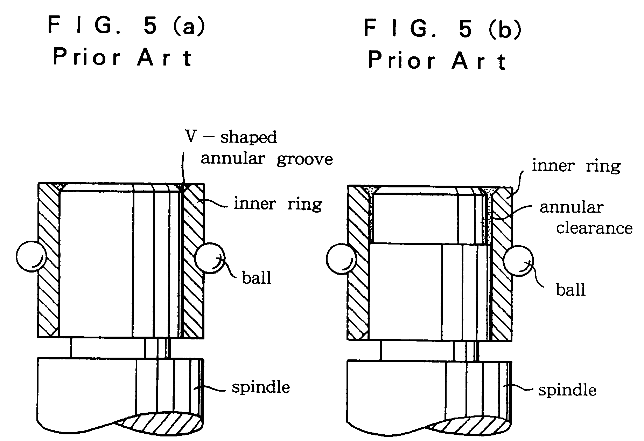

It is known for an inner race of a ball bearing to be fixedly mounted on a spindle of a motor by means including a suitable adhesive, as described below by reference to Figures 5(a) and 5(b) of the accompanying drawings.

Thus,
(a) As shown in Figure 5(a), an annular groove, which is formed between a chamfered outer end portion of the motor spindle and a corresponding chamfered inner end portion of the inner race of the ball bearing, whereby the groove has a V-shaped form in cross section, is filled with the adhesive which is permitted to flow into an annular clearance formed between an outer peripheral surface of the spindle and an inner peripheral surface of the inner race of the ball bearing. The adhesive is allowed to cure in such annular clearance so as to fix the inner race of the ball bearing to the spindle of the motor. However, this first approach is not reliable, because the adhesive supplied to the annular groove often does not flow well enough into the annular clearance formed between the spindle and the inner race of the ball bearing to provide an adequate adhesive bond therebetween.
(b) As shown in Figure 5(b) in an attempt to overcome this difficulty it is known to reduce the diameter of the spindle over an end portion thereof to form a relatively large annular clearance between the outer peripheral surface of the reduced-diameter portion of the spindle and the inner peripheral surface of the inner race of the ball bearing. As a result, the adhesive supplied to the V-section annular groove formed at the end of the spindle/inner race combination can flow readily into this relatively large annular clearance and can be cured therein subsequently so as to fix the inner race of the ball bearing to the spindle of the motor.

In a motor of a normal size, this second approach is adequate, because the annular clearance formed between the inner race and the spindle can be sufficiently filled with the adhesive to provide a good adhesive bond therebetween.

This second approach cannot be used, however, to secure the inner race of a miniature ball bearing to the spindle of a miniature motor, because it has been found that the inner race of the miniature ball bearing can be deformed by forces arising when the adhesive is cured, or that, at any rate, the inner race may be misaligned with respect to the spindle axis after such curing.

Patent specification JP-A-4183241 discloses a number of different motor constructions, each having a common manner of fixing a bearing inner-race to a shaft. For instance, one such construction comprises a motor having a spindle to which a bearing inner-race is fitted. The portion of the spindle received within the inner race has a spiral pattern of grooves formed on its surface which provide a clearance between the spindle and the inner surface of the race which may be filled with an adhesive to fix the race to the spindle. The spindle is further provided with an annular groove adjacent the spiral grooves, said annular groove being filled with said adhesive.

Patent specification FR-A-2612268 discloses an arrangement in which a bearing race is fixed to a shaft by means of adhesive located in grooves formed on the surface of the shaft. The groove patterns may either take the form of a combination of axial and annular grooves or a spiral pattern.

It is an object of the present invention to provide a motor having improved rotational accuracy, which motor is free from disadvantages inherent in the conventional motors described above; and, in particular, has an improved adhesive bond between an inner race of a ball bearing and a spindle of the motor whereby the inner race is fixed to the spindle in a reliable manner. It is a further object of the invention to provide a technique in which the risk of deformation of the inner race due to curing of the fixing adhesive is avoided even when the inner race is a miniature one which is extremely thin in wall thickness.

According to this invention there is provided a motor comprising a substantially vertical spindle and ball-bearing means for mounting a rotor for rotation on said spindle, said ball-bearing means comprising a central sleeve portion of rotor and an inner race mounted on said spindle having a first ball-running groove formed around its periphery; a portion of the outer peripheral surface of said spindle having a pattern of grooves formed therein, said inner-race being mounted on said grooved portion and fixed thereto by an adhesive in the clearance formed between the inner surface of said inner race and said grooved portion; wherein said spindle is provided with a lower large-diameter portion and an upper small diameter portion, and said ball-bearing means further comprises a second ball-running groove formed in the outer peripheral surface of said lower large-diameter spindle portion, said grooved portion being a knurled portion (16) of said upper small-diameter spindle portion upon which knurled portion (16) said inner race is mounted, and said sleeve portion forming an outer race of said ball bearing means, the inner peripheral surface of sleeve portion being formed with a lower ball-running groove and an upper ball-running groove, said upper ball running groove being adapted to receive a first plurality of balls disposed between said upper ball-running groove and said first ball-running groove, said lower ball-running groove being adapted to receive a second plurality of balls disposed between said lower ball-running groove and said second ball-running groove.

Preferably said sleeve portion is integrally formed with said rotor as one piece.

Advantageously the motor further comprises a sleeve-like yoke holder provided with a bottom portion mounted on a base, a yoke mounted on said yoke holder, said yoke being provided with a coil, wherein said spindle is vertically mounted in a central portion of said bottom portion of said yoke holder, said rotor carrying a magnet opposite said yoke, said rotor sleeve portion being disposed inside said yoke holder, and said knurled portion being located at the upper end of said small-diameter spindle-portion.

Conveniently said spindle is provided with an annular groove around its periphery in an area adjacent to said knurled portion; said inner race being mounted on said spindle so as to cover said knurled portion and said annular groove of said spindle; said annular groove, in addition to said clearance between the inner surface of said inner race and said knurled portion of said spindle, being filled with said adhesive.

Preferably said rotor is provided with a peripheral flange portion which carries said magnet on its inner side.

Advantageously said rotor carries said magnet on an outwardly directed side of said sleeve portion.

Conveniently said adhesive is an anaerobic adhesive.

Embodiments of the invention are described below by way of example with reference to the accompanying drawings, in which:-
FIGURE 1 is a longitudinal sectional view of an outer-rotor type motor embodying the present invention;
FIGURE 2 is an enlarged cross-sectional view of the inner race of the ball bearing mounted on a knurled portion of the spindle of the motor of Figure 1;
FIGURE 3(a) is a fragmentary side view to an enlarged scale illustrating the knurled portion of the spindle in one form,
FIGURE 3(b) is a fragmentary side view similar to Figure 3(a) but showing the knurled portion of the spindle in another form;
FIGURE 4 is a longitudinal sectional view of another form of inner-rotor type motor embodying the present invention;
FIGURE 5(a) is a fragmentary side view similar to Figures 3(a) and 3(b) but showing a conventional mounting of an inner race of a ball bearing on the end of a motor spindle; and
FIGURE 5(b) is a fragmentary side view similar to Figure 5(a) but showing another conventional arrangement.

In the following, there is described, with reference to the drawings, a magnetic disk unit embodying the present invention.

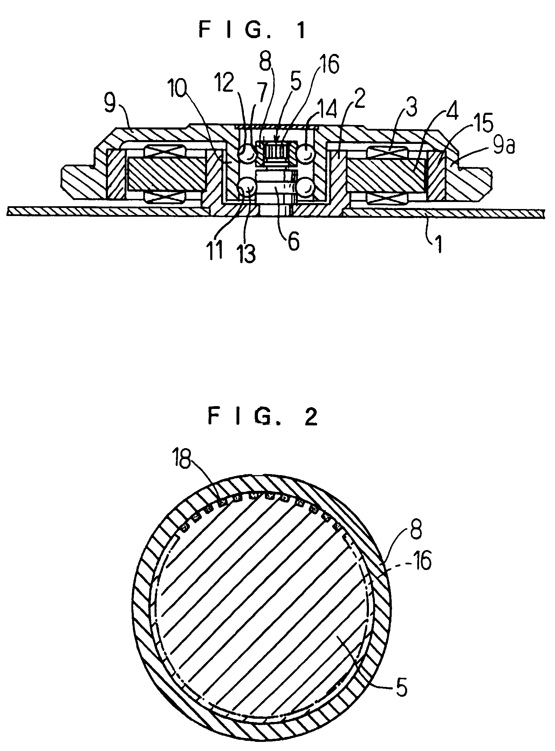

In Figure 1 there is shown in outer-rotor type motor embodying the present invention, in which the reference numeral 1 denotes a base. A sleeve-like yoke holder 2 provided with a bottom portion is mounted on a central portion of the base 1. Disposed around the yoke holder 2 is a stator yoke 4 which is provided with an energizing coil 3.

A spindle 5 has its lower portion fixedly mounted in a centre hole of the bottom portion of the yoke holder 2 and has its upper portion formed into a small diameter shaft portion, so that the spindle 5 is constructed of a lower large-diameter shaft portion and the upper small-diameter shaft portion to form a stepped shaft.

Formed in an outer peripheral portion of the lower large-diameter shaft portion of the spindle 5 is a ball-running groove 6. An inner race 8 of a ball bearing unit is fitted to the small-diameter shaft portion of the spindle 5, and provided with a ball running groove 7 in its outer peripheral portion. A sleeve portion 10 forming an outer race of the ball bearing unit is integrally formed with a rotor 9 and extends downward from a lower surface of a central portion of the rotor 9. Formed in an inner surface of the sleeve portion 10 of the rotor 9 are a pair of ball-running grooves 11 and 12 which are disposed opposite the ball-running grooves 6 and 7, respectively. A plurality of balls 13 are disposed between the ball-running grooves 6 and 11, while a plurality of balls 14 are disposed between the ball-running grooves 7 and 12. As is clear from the above description, the ball bearing unit, which comprises the sleeve portion 10 of the rotor 9, balls 13 and 14, inner race 8 and the ball-running groove 6, serves to mount the rotor 9 rotatably on the spindle 5.

In Figure 1, the reference numeral 15 denotes a magnet which is mounted on an inner surface of a flange portion 9a of the rotor 9 so as to be opposite the stator yoke 4.

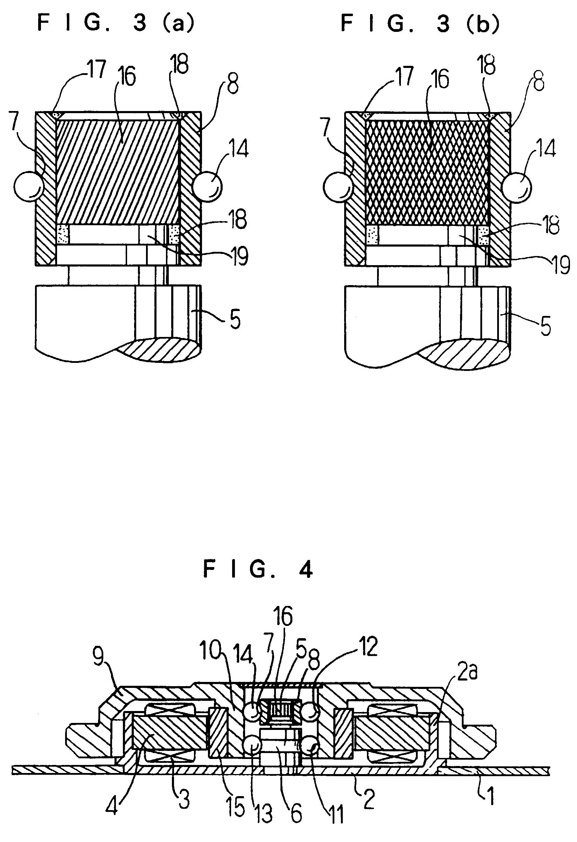

At its upper end, the outer peripheral edge of the small-diameter portion of the spindle is chamfered. The outer peripheral surface of the small-diameter portion of the spindle adjacent its free end is knurled as indicated at 16 in Figure 3(a). An adhesive, for example an anaerobic adhesive 18, is permitted to fill an annular groove 17 which is formed between the chamfered portion of the upper end of the small-diameter portion of the spindle 5 and the inner peripheral surface of the upper end of the inner race 8 of the ball bearing. As is clear from Figures 3(a) and 3(b), the annular groove 17 has a V-shaped form in cross section. The adhesive 18 thus supplied to the annular groove 17 flows into the space or spaces defined between the race 8 and the knurled portion 16 of the small diameter portion of the spindle 5. The adhesive is allowed to harden in the space or spaces so as to fix the inner race 8 to the spindle 5.

Various patterns of knurling may be applied to the spindle over the region 16. Thus, the knurling may comprise a pattern of straight grooves in the spindle surface, these grooves running parallel to the rotational axis of the spindle 5 as shown in Figure 1. In a variant, as shown in Figure 3(a), the knurling may comprise a pattern of parallel oblique grooves angled relative to the rotational axis of the spindle 5, and thus extending helically over the surface of the spindle.

In another variant, the knurling may comprise a pattern of two intersecting sets of grooves, each set comprising parallel grooves extending helically around spindle 5, the two sets having equal but opposite pitch angles whereby a pattern or grid of diamond-shapes is defined between the intersecting grooves, as shown in Figure 3(b). Of these patterns, the pattern of straight lines shown in Figure 1 is most preferable.

An additional, peripheral annular groove 19 is formed in the small-diameter portion of the spindle 5 in an area adjacent to the knurled portion 16 of the spindle 5. The adhesive 18 is also permitted to fill such additional annular groove 19 to further improve the adhesive bond between the inner race 8 of the ball bearing and the small-diameter portion of the spindle 5.

It will be appreciated that, prior to curing of the adhesive 18, the inner race 8 of the ball bearing is press-fitted to the spindle 5 from the upper end thereof by applying a force to the inner race 8 so that the inner race 8 is adequately positioned relative to the spindle 5.

Figure 4 shows another form of inner-rotor type spindle motor embodying the present invention. As shown in Figure 4, the spindle 5 constructed of a stepped shaft is mounted in a central hole of a bottom portion of the stator yoke holder 2 so as to extend upward from the bottom portion of the holder 2 which is provided with a sleeve-like rib portion 2a. The stator yoke 4 is mounted on an inner peripheral surface of the rib portion 2a of the stator yoke holder 2.

In the embodiment of the invention shown in Figure 4, the sleeve portion 10 of the main body of the ball bearing unit is integrally formed with the rotor 9 in the lower surface of the central portion of the rotor 9.

The remaining construction of the main body of the ball bearing unit of the embodiment shown in Figure 4 is the same as that of the main body of the ball bearing unit of the embodiment shown in Figure 1, with the exception of the magnet 15 which is mounted on the outer peripheral portion of the sleeve portion 10 of the ball bearing unit in the embodiment as shown in Figure 4.

In the embodiment of Figure 4 the spindle 5 again has a knurled portion 16 and an annular groove 19 as described in relation to Figures 1 to 3(b) and the inner race 8 of the ball bearing is again fixed to the knurled portion 16 of the spindle 5 through the adhesive introduced between the race 8 and the knurled portion 16 and into the annular groove 19 of the spindle 5.

Incidentally, in an inner or an upper surface of the flange portion 9a of the rotor 9, there is provided a printed circuit board connected with the coil 3 for actuating the motor. Alternatively such printed circuit board may be mounted on the inner surface of the base 1 or yoke holder 2. Such printed circuit board is omitted in the drawings for the sake of clarity.

Since the knurled portion 16 of the spindle 5, on which the inner race 8 of the ball bearing is mounted, has its entire outer peripheral surface covered with a layer of the adhesive 18, the adhesive bond formed between the inner race 8 and the knurled portion 16 of the spindle 5 is increased in bonding area and bonding strength, which makes it possible to fix the inner race 8 to the spindle 5 in a reliable manner and improve rotational accuracy of the motor.

Furthermore, even where the ball bearing used in a motor embodying the present invention is a miniature one, there is no risk of deformation of the inner race 8 when the adhesive 18 is cured, because the knurled portion 16 of the spindle 5 has its outer diameter formed within the allowable fitting tolerance of the inner race 8 of the ball bearing. Consequently, it is possible for the present invention to provide a motor with improved rotational accuracy.

## Claims

1. A motor comprising;
a substantially vertical spindle (5) and ball-bearing means for mounting a rotor (9) for rotation on said spindle (5), said ball-bearing means comprising a central sleeve portion (10) of rotor (9) and an inner race (8) mounted on said spindle (5) having a first ball-running groove (7) formed around its periphery; a portion (16) of the outer peripheral surface of said spindle (5) having a pattern of grooves formed therein, said inner-race (8) being mounted on said grooved portion (16) and fixed thereto by an adhesive (18) in the clearance formed between the inner surface of said inner race (8) and said grooved portion (16); characterised in that said spindle is provided with a lower large-diameter portion and an upper small diameter portion, and said ball-bearing means further comprises a second ball-running groove (6) formed in the outer peripheral surface of said lower large-diameter spindle portion, said grooved portion (16) being a knurled portion (16) of said upper small-diameter spindle portion upon which knurled portion (16) said inner race (8) is mounted, and said sleeve portion (10) forming an outer race of said ball bearing means, the inner peripheral surface of sleeve portion (10) being formed with a lower ball-running groove (11) and an upper ball-running groove (12), said upper ball running groove (12) being adapted to receive a first plurality of balls (14) disposed between said upper ball-running groove (12) and said first ball-running groove (7), said lower ball-running groove (11) being adapted to receive a second plurality of balls (13) disposed between said lower ball-running groove (11) and said second ball-running groove (6).

2. A motor according to Claim 1, wherein said sleeve portion (10) is integrally formed with said rotor (9) as one piece.

3. A motor according to Claim 1 or Claim 2, further comprising a sleeve-like yoke holder (2) provided with a bottom portion mounted on a base (1), a yoke (4) mounted on said yoke holder (2), said yoke (4) being provided with a coil (3), wherein said spindle (5) is vertically mounted in a central portion of said bottom portion of said yoke holder (2), said rotor (9) carrying a magnet (15) opposite said yoke (4), said rotor sleeve portion (10) being disposed inside said yoke holder (2), and said knurled portion (16) being located at the upper end of said small-diameter spindle-portion.

4. A motor according to any one of the preceding claims, wherein said spindle (5) is provided with an annular groove (19) around its periphery in an area adjacent to said knurled portion (16); said inner race (8) being mounted on said spindle (5) so as to cover said knurled portion (16) and said annular groove (19) of said spindle (5); said annular groove (19), in addition to said clearance between the inner surface of said inner race (8) and said knurled portion (16) of said spindle (15), being filled with said adhesive (18).

5. A motor according to Claim 3 or Claim 4, wherein said rotor (9) is provided with a peripheral flange portion (9a) which carries said magnet (15) on its inner side.

6. A motor according to Claim 3 or Claim 4, wherein said rotor (9) carries said magnet (15) on an outwardly directed side of said sleeve portion (10).

7. A motor according to any one of the preceding claims wherein said adhesive (18) is an anaerobic adhesive.

## Patentansprüche

1. Motor umfaßt; eine im wesentlichen vertikale Welle bzw. Spindel (5) und Kugellagermittel zum Befestigen eines Rotors (9) zur Drehung auf der Spindel (5), wobei das Kugellagermittel umfaßt einen zentralen Hülsenabschnitt (10) des Rotors (9) und einen inneren (Lauf-)Ring (8), der an der Spindel (5) angebracht ist, mit einer ersten Kugellaufnut (7), die um seinen Umfang herum ausgebildet ist; einen Abschnitt (16) der äußeren Umfangsfläche der Spindel (5) mit einem Muster von darin ausgebildeten Nuten, wobei der innere (Lauf-)Ring (8) an dem Nutabschnitt (16) angebracht und daran mit einem Klebmittel (18) in dem Zwischenraum fixiert ist, der zwischen der inneren Fläche des (Lauf-)Rings (8) und dem Nutabschnitt (16) ausgebildet ist; dadurch gekennzeichnet, daß die Spindel mit einem unteren Abschnitt mit großem Durchmesser und einem oberen Abschnitt mit kleinem Durchmesser versehen ist, und das Kugellagermittel ferner umfaßt eine zweite Kugellaufnut (6), die in der äußeren Umfangsfläche des unteren Spindelabschnitts mit großem Durchmesser ausgebildet ist, wobei der Nutabschnitt (16) ein gerändelter/geriffelter Abschnitt (16) des oberen Spindelabschnitts mit kleinem Durchmesser ist, wobei auf dem gerändelten/geriffelten Abschnitt (16) der innere (Lauf-)Ring (8) angebracht ist, und der Hülsenabschnitt (10) eine äußere (Lauf-)Bahn des Kugellagermittels bildet, wobei die innere Umfangsfläche des Hülsenabschnitts (10) mit einer unteren Kugellaufnut (11) und einer oberen Kugellaufnut (12) versehen ist, wobei die obere Kugellaufnut (12) beschaffen ist, eine erste Anzahl von Kugeln (14) aufzunehmen, die zwischen der oberen Kugellaufnut (12) und der ersten Kugellaufnut (7) angeordnet sind, und die untere Kugellaufnut (11) beschaffen ist, eine zweite Anzahl von Kugeln (13) aufzunehmen, die zwischen der unteren Kugellaufnut (11) und der zweiten Kugellaufnut (6) angeordnet sind.

2. Motor nach Anspruch 1, dadurch gekennzeichnet, daß der Hülsenabschnitt (10) mit dem Rotor (9) einstückig bzw. integral ausgebildet ist.

3. Motor nach Anspruch 1 oder 2, umfaßt ferner einen hülsenartigen Kern- bzw. Jochhalter (2), der mit einem Bodenabschnitt versehen ist, der an einer Basis (1) angebracht ist, wobei ein Kern bzw. Joch (4) an dem Jochhalter (2) angebracht ist, und das Joch (4) mit einer Spule (3) versehen ist, wobei die Welle bzw. Spindel (5) vertikal in einem mittigen Abschnitt des Bodenabschnitts des Jochhalters (2) angebracht ist, wobei der Rotor (9) einen dem Joch (4) gegenüberliegenden Magneten (15) trägt, wobei der Rotorhülsenabschnitt (10) innerhalb des Jochhalters (2) angeordnet ist und sich der gerändelte/geriffelte Abschnitt (16) an dem oberen Ende des Spindelabschnitts mit kleinem Durchmesser befindet.

4. Motor nach einem oder mehreren der vorhergehenden Ansprüche, dadurch gekennzeichnet, daß die Welle (5) mit einer ringförmigen Nut (19) um ihren Umfang in einem an den gerändelten/geriffelten Abschnitt (16) angrenzenden Bereich versehen ist; wobei der innere (Lauf-)Ring (8) auf der Welle (5) befestigt ist, um den gerändelten/geriffelten Abschnitt (16) und die ringförmige Nut (19) der Welle (5) abzudecken; wobei die ringförmige Nut (19) zusätzlich zu dem Zwischenraum zwischen der inneren Fläche des inneren (Lauf-)Rings (8) und dem gerändelten/geriffelten Abschnitt (16) der Spindel (5) mit einem Klebmittel (18) ausgefüllt ist.

5. Motor nach Anspruch 3 oder 4, dadurch gekennzeichnet, daß der Rotor (9) mit einem umfänglichen Flanschabschnitt (9a) versehen ist, der den Magneten (15) an seiner Innenseite trägt.

6. Motor nach Anspruch 3 oder 4, dadurch gekennzeichnet, daß der Rotor (9) den Magneten (15) an einer nach außen gerichteten Seite des Hülsenabschnitts (10) trägt.

7. Motor nach einem oder mehreren der vorhergehenden Ansprüche, dadurch gekennzeichnet, daß das Klebmittel (18) ein anaerobes Klebmittel ist.

## Revendications

1. Moteur comprenant :
un arbre sensiblement vertical (5) et des moyens à roulement à billes permettant de monter un rotor (9) pouvant tourner sur ledit arbre (5), lesdits moyens à roulement à billes comprenant une partie à manchon centrale (10) de rotor (9) et un chemin de roulement intérieur (8) monté sur ledit arbre (5) ayant une première gorge de roulement de billes (7) formée autour de sa périphérie ; une partie (16) de la surface périphérique extérieure dudit arbre (5) ayant une configuration de gorges qui y sont formées, ledit chemin de roulement intérieur (8) étant monté sur ladite partie à gorges (16) et étant fixé à celle-ci au moyen d'un adhésif (18) dans l'espace formé entre la surface intérieure dudit chemin de roulement intérieur (8) et ladite partie à gorge (16) ; caractérisé en ce que ledit arbre comporte une partie inférieure à grand diamètre et une partie supérieure à petit diamètre, et lesdits moyens à roulement à billes comprennent en outre une seconde gorge de roulement de billes (6) formée dans la surface périphérique extérieure de ladite partie inférieure d'arbre à grand diamètre, ladite partie à gorges (16) étant une partie moletée (16) de ladite partie supérieure d'arbre à petit diamètre sur laquelle partie moletée ledit chemin de roulement intérieur (8) est monté, et ladite partie à manchon (10) formant un chemin de roulement extérieur desdits moyens à roulement à billes, la surface périphérique intérieure de ladite partie à manchon (10) étant formée d'une gorge inférieure de roulement de billes (11) et d'une gorge supérieure de roulement de billes (12), ladite gorge supérieure de roulement de billes (12) étant conçue pour recevoir une première pluralité de billes (14) disposées entre ladite gorge supérieure de roulement de billes (12) et ladite première gorge de roulement de billes (7), ladite gorge inférieure de roulement de billes (11) étant conçue pour recevoir une seconde pluralité de billes (13) disposées entre ladite gorge inférieure de roulement de billes (11) et ladite seconde gorge de billes (6).

2. Moteur selon la revendication 1, dans lequel ladite partie à manchon (10) est formée d'un seul tenant avec ledit rotor (9).

3. Moteur selon la revendication 1 ou 2, comprenant en outre un porte-culasse du type manchon (2) pourvu une partie inférieure montée sur une embase (1), une culasse (4) montée sur ledit porte-culasse (2), ladite culasse (4) étant pourvue d'une bobine (3), dans lequel ledit arbre (5) est monté verticalement dans une partie centrale de ladite partie inférieure dudit porte-culasse (2), ledit rotor (9) portant un aimant (15) opposé à ladite culasse (4), ladite partie à manchon de rotor (10) étant disposée à l'intérieur dudit porte-culasse (2), et ladite partie moletée (16) étant située à l'extrémité supérieure de ladite partie d'arbre à petit diamètre.

4. Moteur selon l'une quelconque des revendications précédentes, dans lequel ledit arbre (5) est pourvu d'une gorge annulaire (19) autour de sa périphérie dans une zone adjacente à ladite partie moletée (16) ; ledit chemin de roulement intérieur (8) étant monté sur ledit arbre (5) de manière à recouvrir ladite partie moletée (16) et ladite gorge annulaire (19) dudit arbre (5) ; ladite gorge annulaire (19), en plus dudit espace entre la surface intérieure dudit chemin de roulement intérieur (8) et de ladite partie moletée (16) dudit arbre (15), étant remplie dudit adhésif (18).

5. Moteur selon la revendication 3 ou 4, dans lequel ledit rotor (9) est pourvu d'une partie à rebord périphérique (9a) qui porte ledit aimant (15) sur sa face intérieure.

6. Moteur selon la revendication 3 ou 4, dans lequel ledit rotor (9) porte ledit aimant (15) sur une face dirigée vers l'extérieur de ladite partie à manchon (10).

7. Moteur selon l'une quelconque des revendications précédentes, dans lequel ledit adhésif (18) est un adhésif anaérobique.
